Europäisches Patentamt

European Patent Office

Office européen des brevets

(19)

(11) Publication number: **0 082 165**

**B1**

(12) **EUROPEAN PATENT SPECIFICATION**

(45) Date of publication of patent specification: **02.10.85**

(51) Int. Cl.⁴: **A 23 D 5/02**

(21) Application number: **82901927.2**

(22) Date of filing: **11.06.82**

(86) International application number:
**PCT/SE82/00210**

(87) International publication number:
**WO 83/00005 06.01.83 Gazette 83/01**

(54) **SPREADABLE FAT PRODUCT AND METHOD FOR ITS PRODUCTION.**

(30) Priority: **25.06.81 SE 8103998**

(43) Date of publication of application:
**29.06.83 Bulletin 83/26**

(45) Publication of the grant of the patent:
**02.10.85 Bulletin 85/40**

(84) Designated Contracting States:
**CH DE FR GB LI**

(56) References cited:
**DE-A-2 155 696**
**SE-B- 393 253**

(73) Proprietor: **ALFA-LAVAL AB**
**Box 500**
**S-147 00 Tumba (SE)**

(72) Inventor: **ANDERSSON, Kenneth Lars Olof**
**Blävingevägen 29**
**S-240 17 S. Sandby (SE)**

(74) Representative: **Lerwill, John et al**
**A.A. Thornton & Co. Northumberland House**
**303-306 High Holborn**
**London, WC1V 7LE (GB)**

Courier Press, Leamington Spa, England.

## Description

The present invention relates to a fat product, which is spreadable at a refrigerator temperature and contains 35—55% fat, 4—7% protein and 41—58% water.

It is well known to produce different spreadable fat products with a low fat content in order to meet a consumer interest in products with a low calory content. The manufacture of such products is disclosed for example in SE 393 253, which describes a fat emulsion of the water-in-oil type with a low calory content and a high content of protein. This fat emulsion is produced from milk, which milk is membrane filtrated, after which the protein concentrate is heat treated before it is forced to emulsify in a fat phase, by which there is obtained a water-in-oil emulsion. Also, from USSR-publication 645 640 it is known to manufacture a fat product with a low fat content and a high protein content by a process in which concentrate obtained by ultra-filtration of skim milk is mixed with cream after which the mixture is churned so that a water-in-oil emulsion is produced.

The two fat products described above consist of water-in-oil emulsions, which are the most common type of emulsion for margarine, butter and margarine with a reduced fat content.

It is known per se to manufacture fat products also in form of oil-in-water emulsions. A study of such emulsions is shown in the Canadian Dairy and Ice Cream Journal 45 (1966):1, where there is described a fat product in which milk protein consists of calcium-reduced skim milk powder. The skim milk powder is reconstituted in water and mixed at high speed with fat. Owing to the reduced calcium content the skim milk powder is made more absorbent. No product of this type is available on the market to-day, which may be due to the fact that the chemical change of the caseinate has resulted in a taste of the fat product which has not been accepted by the consumers.

Another fat product, which consists of an oil-in-water emulsion, is described in the Australian Patent Publication 498 980. In this product the fat phase consists of milk fat and animal or vegetable fat mixed with a water phase, containing a stabilizing agent such as soja meal, gelatine or modified starch.

According to the invention, there is now proposed a new spreadable fat product, which is characterised by a novel combination of features separately known from previous fat products. The proposed fat product contains protein obtained by ultra-filtration of a milk product, and after mixing the protein with a fat raw material and breaking up the fat in small spheres constitutes a stable oil-in-water emulsion, which emulsion is stabilized by the milk protein, and which fat product is free from additives in the form of stabilizing the agents and emulsifiers. It has been found that such a fat product, in which the protein source consists of an ultra-filtrated milk is considered better as regards taste, than other fat products which include conventional protein sources such as milk powder and condensed milk. The latter contain lactose, which gives the products a taste of melt cheese.

The fat raw material may comprise milk fat and/or fat from another origin. Even when the fat consists of milk fat the product has an excellent spreadability at refrigerator temperature. The continuous phase in an emulsion determines the characteristics of the emulsion. A product of milk fat in which the fat constitutes a continuous phase is not spreadable at refrigerator temperature.

The crystals of the fat form a network, with the number of crystals determining the hardness of the product. When the product is warmed some of the crystals melt and the fat becomes softer.

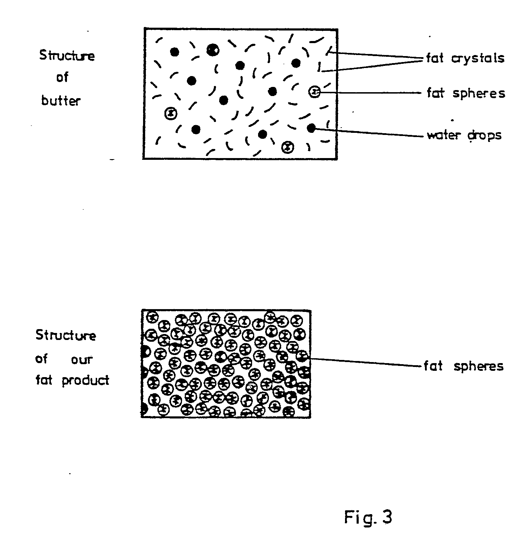

The product of the present invention includes a number of small drops or spheres of fat, which certainly contain crystallized fat, but the small spheres glide and roll upon each other in such a way that the product is still soft. The little fat spheres are achieved by homogenization. A comparison between the structures of butter and the fat product of the invention is illustrated in Figure 3 of the appended drawings.

According to the invention a spreadable product is made possible which contains only milk fat and this is a great advantage in many countries, where it is forbidden to sell products which contains milk fat mixed with another fat.

The fat product has also a superior shelf life even if it is manufactured as a "nature product" i.e. completely without any additives in the form of emulsifiers and stabilizing agents. The milk protein forms a protein shell around the fat drops in the emulsion and the emulsion remains stable for a long time. With a reduced fat content an increased amount of protein is needed, since the amount of water increases at the same time and more protein is needed to bind the water in the form of a gel. At a fat content of 35% there is needed 7% of protein, while at a fat content of 55% only 4% of protein is needed to make the product stable.

The limits for the fat content initially mentioned hereinabove are selected due to consumer viewpoints. A fat product with fat content below 35% tastes like a melt cheese, while a fat product with a fat content higher than 55% cannot be considered as a fat product with a reduced calory content.

The invention also provides a method of manufacturing the proposed fat product wherein a milk product with or without fat is pasteurized at 85—95°C, and subject to ultra-filtration after cooling in order to achieve a higher concentration of protein and at the same time a reduction of the lactose content. The concentrate enriched in protein is mixed with the fat raw material and homogenized at 40—70°C in order to form a stable oil-in-water emulsion. By the term "homogenization" it is meant that the product is not only given an homogenous structure, but that it is subjected to a treatment which in the dairy industry is called homogenization and involves the fat spheres being subjected to a strong mechanical treatment which reduces the fat spheres to a size smaller than 10 μ.

In the fat product of the present invention, the water is the continuous phase in the fat product, and the product may easily be flavoured by fermenting a part or the whole of the protein concentrate. In this way the product may be given yoghurt-, kefir- or butter taste as desired.

By means of the proposed manufacturing method, a fat product containing different kinds of fat may be obtained as desired, but the method is of particular advantage when the fat raw material consists of milk fat, since the fat product obtained has a superior spreadability at refrigerator temperature. To spread milk fat (butter) at this temperature is generally very difficult.

The homogenization of the mixed protein and fat raw material may with advantage be performed in a two-step homogenization process. It is possible to obtain a stable fat product by the mixture maxing a single pass through an homogenizer, but with two homogenization steps, even better distribution of the reduced size fat spheres is obtained. After homogenization the still warm product is packed directly into consumer packaging.

The manufacture of a fat product according to the invention is described in further detail below with reference to the accompanying drawings, in which:

Figure 1 is a flow chart illustrating the steps in the manufacturing process;

Figure 2 is a schematic representation of a plant for carrying out the process; and

Figure 3 is a sketch comparing the structure of butter with that of the fat product of the invention.

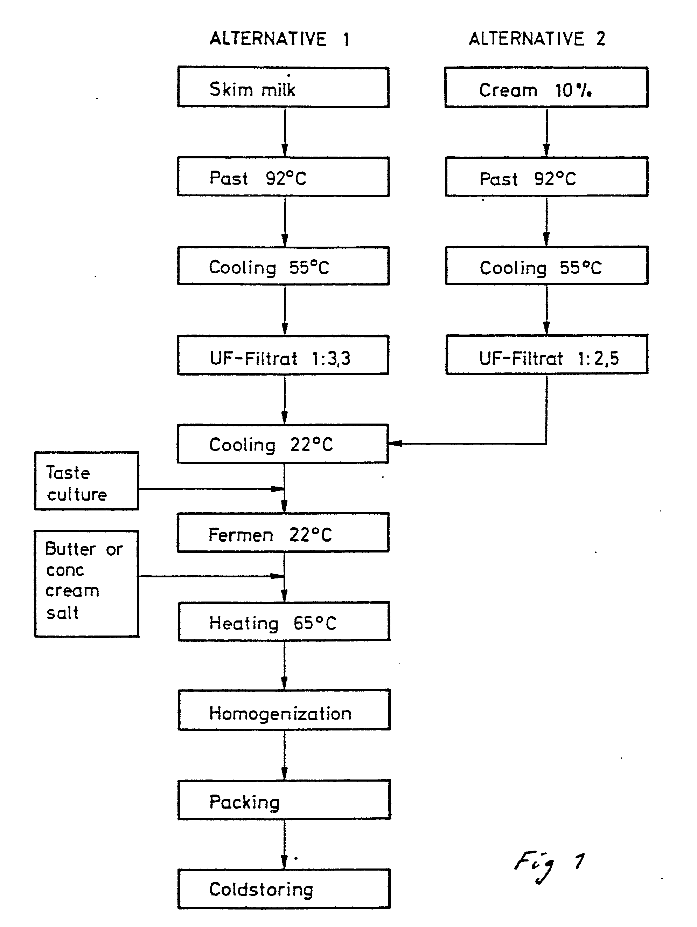

In Fig. 1, two alternatives are shown, i.e. the manufacture of a fat product from skim milk and from cream.

The skim milk, or alternatively cream, is pasteurized for three minutes at 92°C, is cooled thereafter to 55°C and then subject to ultra-filtration at pH 6,0—7,0, so that the milk raw material is concentrated due to water and lactose passing through the membrane. As may be seen from the flow-chart, the skim milk is concentrated (1:3,3) more than the cream (1:2,5). After cooling to 22°C the taste culture comprising e.g. butter acid bacteria is added to a part or the whole amount of the protein concentrate, after which it may ferment for 19 hours at 22°C. The skim milk concentrate thus obtained has a protein content of 10—11% whereas the cream concentrate has a protein content of up to 8%.

The protein concentrate is thereafter mixed with fat raw material in the form of butter or concentrated cream and salt, the mixture is heated to 65°C and homogenized in two steps, the first step being at a pressure of 150 kp/cm$^2$ (15 MPa) and the second step being at a pressure of 50 kp/cm$^2$ (5 MPa). The product may be packed directly i.e. while still warm after the homogenization, after which it is cold stored.

In order to give some more information about the invention an example on the manufacture of a fat product according to the invention is given below.

Example

143 kg cream (10% fat) is pasteurized at 92°C with a holding time of three minutes. After the pasteurization the cream is cooled to 55°C and ultra-filtrated, such that the concentration is increased 2,5 times, so that the protein content is about 8%. After the concentration, 57 kg milk concentrate remains, which is cooled to 22°C. Two thirds of the concentrate is fermented for 18 h at 22°C to approximately pH 4,8. The fermented and unfermented concentrate is mixed with 50 kg melted butter and 1,2 kg salt. A favourable pH for the achieved mixture is 5,0—5,2. After having heated the mixture to 65°C it is homogenized in two steps at 150 kp/cm$^2$ and 50 kp/cm$^2$, respectively, after which the fat product obtained is wrapped in consumer packaging.

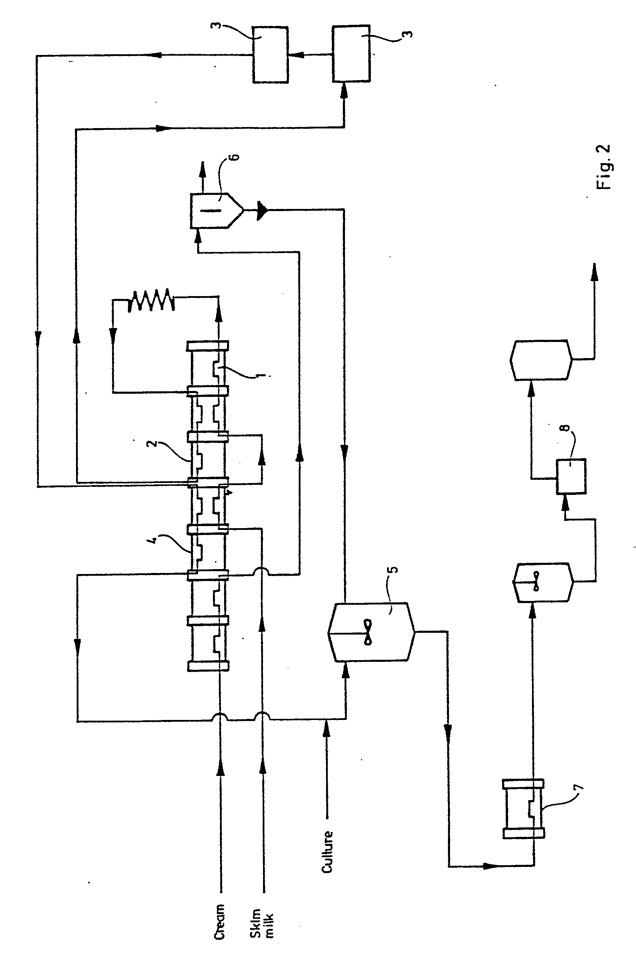

An installation for carrying out the method of producing the fat product according to the invention is shown schematically in Fig. 2. Skim milk is heated and pasteurized in one section 1 of a plate heat exchanger and is then cooled by flowing in counter-current to the milk to be treated in another section 2.

After this treatment the milk is led to the UF-filter 3 and concentrated. The concentrate is forwarded to the plate heat exchanger 4 and cooled. A part of the concentrate is fermented by adding taste culture. After fermenting for the desired time in a tank 5 concentrated cream is added, this cream having been heated and concentrated in a centrifugal separator 6, from which it is led to the tank 5. The mixture is fed from the tank 5 to a plate heat exchanger 7 and heated to the desired homogenization temperature. It is then forwarded to a 2-step homogenizer 8, where the fat-in-water emulsion is formed. The fat product is packaged warm.

**Claims**

1. A fat product, which is spreadable at refrigerator temperature and consists 35—55% fat, 4—7% protein and 41—58% water, characterised in that the protein has been obtained by ultra-filtration of a milk product, and the fat product produced by mixing the protein and a fat raw material and homogenization of the fat drops consists of a stable oil-in-water emulsion, which emulsion is stabilized by the milk protein, and which fat product is free from additives in the form of stabilizing agents and emulsifiers.

2. A fat product according to claim 1, characterised in that the fat raw material consists of milk fat.

3. A method of manufacturing a spreadable fat product according to claim 1, characterised in that a milk product with or without fat is pasteurized at 89—95°C and subject to ultra-filtration after cooling in order to achieve a higher concentration of protein and at the same time reduction of the lactose content, the concentrate enriched in protein is mixed with fat raw material and the fat spheres are finely divided and reduced to a size smaller than 10 µ by a strong mechanical treatment (homogenization) at 40—70°C in order to form a stable oil-in-water emulsion.

4. A method according to claim 3, characterised in that at least part of the protein concentrate is flavoured by fermentation.

5. A method according to claim 3 or 4, characterised in that the fat raw material consists of milk fat.

6. A method according to claim 3, 4 or 5, characterised in that the homogenization is carried out as a two-step homogenization.

7. A method according to any one of claims 3 to 6, characterised in that the formed fat product is packaged warm.

## Revendications

1. Produit gras qui peut être tartiné à la température du réfrigérateur et contient 35 à 55% de graisse, 4 à 7% de protéines et 41 à 58% d'eau, caractérisé en ce que les protéines ont été obtenues par ultrafiltration d'un produit du lait et que le produit gras résultant du mélange des protéines et d'une matière première grasse, puis d'une homogénéisation des gouttes de graisse, consiste en une émulsion stable du type huile dans l'eau, l'émulsion étant stabilisée par les protéines du lait et le produit gras étant dépourvu d'additifs sous la forme d'agents stabilisants et émulsifiants.

2. Produit gras suivant la revendication 1, caractérisé en ce que la matière première grasse consiste en graisse de lait.

3. Procédé de fabrication d'un produit gras à tartiner suivant la revendication 1, caractérisé en ce qu'un produit du lait avec ou sans graisse, est pasteurisé à 85—95°C et soumis à une ultrafiltration après refroidissement pour obtenir une plus grande concentration en protéines et en même temps une réduction de la teneur en lactose, le concentré enrichi en protéines est mélange à une matière première grasse et les sphères de graisse sont finement divisées et leur dimension est réduite à moins de 10 microns par un puissant traitement mécanique (homogéneisation) à 40—70°C afin de former une émulsion stable de type huile dans l'eau.

4. Procédé suivant la revendication 3, caractérisé en ce que l'on confère une saveur par fermentation à au moins une partie du concentré protéinique.

5. Procédé suivant la revendication 3 ou 4, caractérisé en ce que la matière première grasse consiste en graisse de lait.

6. Procédé suivant la revendication 3, 4 ou 5, caractérisé en ce que l'homogénéisation est effectuée en tant qu'homogénéisation à deux étapes.

7. Procédé suivant l'une quelconque des revendications 3 à 6, caractérisé en ce que le produit gras formé est conditionné alors qu'il est chaud.

## Patentansprüche

1. Fetterzeugnis, das bei Kühlschranktemperatur streichfähig ist und 35—55% Fett, 4—7% Protein und 41—58% Wasser enthält, dadurch gekennzeichnet, daß das Protein durch Ultrafiltration eines Milchprodukts erhalten wurde und daß das durch Mischen des Proteins mit einem Fettrohstoff und Homogenisieren der Fetttröpfchen bestehende Fetterzeugnis aus einer stabilen Öl-in-Wasser-Emulsion besteht, die vom Milchprotein stabilisiert wird, und frei ist von Zusätzen in Form von Stabilisierungs- und Emulgiermitteln.

2. Fetterzeugnis nach Anspruch 1, dadurch gekennzeichnet, daß der Fettrohstoff aus Milchfett besteht.

3. Verfahren zur Herstellung eines streichfähigen Fetterzeugnisses nach Anspruch 1, dadurch gekennzeichnet, daß das Milchprodukt mit oder ohne Fett bei 85—95°C pasteurisiert und nach dem Kühlen ultrafiltriert wird, um eine höhere Proteinkonzentration und gleichzeitig einen geringeren Lactoseanteil zu erreichen, daß das mit Protein angereicherte Konzentrat mit Fettrohstoff gemischt wird, und daß die Fettkügelchen durch kräftige mechanische Behandlung (Homogenisation) bei 40—70°C fein zerteilt und zu einer Größe von weniger als 10 Mikrometer zerkleinert werden, um eine stabile Öl-in-Wasser-Emulsion herzustellen.

4. Verfahren nach Anspruch 3, dadurch gekennzeichnet, daß mindestens ein Teil des Proteinkonzentrats durch Fermentation eine Geschmacksgebung erfährt.

5. Verfahren nach Anspruch 3 oder 4, dadurch gekennzeichnet, daß der Fettrohstoff aus Milchfett besteht.

6. Verfahren nach Anspruch 3, 4 oder 5, dadurch gekennzeichnet, daß die Homogenisierung zweistufig durchgeführt wird.

7. Verfahren nach einem der Ansprüche 3 bis 6, dadurch gekennzeichnet, daß das fertige Fetterzeugnis warn abgepackt wird.

ALTERNATIVE 1

| Skim milk |
| Past 92°C |
| Cooling 55°C |
| UF-Filtrat 1:3,3 |
| Cooling 22°C |
| Fermen 22°C |
| Heating 65°C |
| Homogenization |
| Packing |
| Coldstoring |

Taste culture

Butter or conc cream salt

ALTERNATIVE 2

| Cream 10% |
| Past 92°C |
| Cooling 55°C |
| UF-Filtrat 1:2,5 |

*Fig 1*

1

Fig. 2

Structure
of
butter

fat crystals

fat spheres

water drops

Structure
of    our
fat product

fat spheres

Fig. 3